# EUROPÄISCHE PATENTSCHRIFT

(11) **EP 0 981 784 B1**
(45) Veröffentlichungstag und Bekanntmachung des Hinweises auf die Patenterteilung: **29.01.2003**
(21) Anmeldenummer: 98933526.0
(22) Anmeldetag: 13.05.1998
(51) Int. Cl.: G05D 23/13, F24D 17/00

(54) **WASSERSTEUERVORRICHTUNG**
WATER CONTROL DEVICE
DISPOSITIF DE COMMANDE D'EAU

(30) Priorität: 14.05.1997 DE 19720235
(43) Veröffentlichungstag der Anmeldung: 01.03.2000
(73) Patentinhaber: Müller, Roland, 66453 Gersheim (DE)
(72) Erfinder: Müller, Roland, 66453 Gersheim (DE)
(74) Vertreter: Vièl, Christof, Dipl.-Ing.
(86) Internationale Anmeldenummer: DE9801335
(87) Internationale Veröffentlichungsnummer: WO98052110

(56) Entgegenhaltungen:
- EP-A- 0 751 355
- DE-C- 19 518 910
- US-A- 5 603 344

## Beschreibung

Die Erfindung betrifft eine Wassersteuervorrichtung mit einem Anschluß an eine Kaltwasserleitung und einem Anschluß an eine Warmwasserleitung, einem Warmwasserauslaß und einem Kaltwasserauslaß sowie einer steuerbaren Wasserumleitvorrichtung zum Umleiten von Warmwasser in die Kaltwasserleitung bei Unterschreitung einer vorgegebenen Grenztemperatur.

Bei bekannten Wassermischventilen ergibt sich das Problem, daß Wasser verloren geht, wenn das Betätigungsorgan für warmes Wasser geöffnet wird und sich in der Warmwasserleitung zwischen dem Warmwasserbereiter und dem Wassermischventil kalt gewordenes Wasser befindet. Dem Benutzer bleibt dann nichts übrig, als dieses kalte Wasser weglaufen zu lassen, bis warmes Wasser bzw. Wasser der gewünschten Temperatur aus der Leitung austritt. Je länger der Weg von dem Warmwasserbereiter zu dem Wasserhahn ist, desto größer ist der dadurch bedingte Wasserverlust. Bei steigenden Kosten für Warmwasser und zunehmendem Umweltbewußtsein ist dieser Zustand für viele Personen nicht länger zu verantworten.

Eine Lösung dieses Problems besteht in einer Zirkulationsleitung, wie sie in zahlreichen Druckschriften, von denen nur beispielhaft die DE-C-39 16 222, die DE-A-35 08 874, die DE-C-34 03 859 und die DE-C-26 05 994 genannt sein sollen, beschrieben wird. Derartige Zirkulationsleitungen führen das Wasser im Kreis vom Warmwasserbereiter zur Zapfstelle und zurück, so daß jeweils warmes Wasser in der Leitung vorliegt. Dies ist jedoch mit einem nicht unbeträchtlichen Energieaufwand verbunden, da ein ständiges Nachheizen des Warmwassers erforderlich ist und berücksichtigt auch die mehr oder weniger großen Wege zwischen Zapfstelle und Zirkulationsleitung nicht.

Daher gibt es Ansätze zur Energieeinsparung bei derartigen Zirkulationsleitungen, wie z.B. die in der DE-A-33 34 103 beschriebene Möglichkeit, eine Zeitsteuerung des Zirkulationskreislaufes vorzusehen und beispielsweise eine Nachtabschaltung vorzunehmen. Die DE-C-35 22 344 beschreibt das temperaturabhängige Einschalten der Zirkulationspumpe bei Einschalten eines Verbrauchers. In der DE-A-44 10 865 wird die Zirkulationspumpe in Abhängigkeit von Strömung und Temperatur in der Leitung betätigt.

Die Ausführungen in diesen Druckschriften stellen zwar Lösungsansätze für ein Vermindern des Energieverbrauchs in Zirkulationsleitungen dar, sie können jedoch nicht die inhärenten Nachteile von Zirkulationsleitungen, nämlich die hohen Energiekosten und den hohen Installationsaufwand einer derartigen Zirkulationsleitung beseitigen.

In der DE-A-44 06 150 wird daher der Ansatz unternommen, auf eine Zirkulationsleitung zu verzichten und stattdessen bei Unterschreitung einer Grenztemperatur Wasser von der Warmwasserleitung in die Kaltwasserleitung zurückzuführen. Dort ist allerdings ein Schaltmodul beschrieben, das die Ventile schaltet und zusätzlich zu diesem Schaltmodul ist ein Zeitrelais vorgesehen, um erst bei unzureichender Leitungswassertemperatur einen Entleerungsvorgang zu aktivieren. Diese aufwendigen Baugruppen können kaum in ein Wassermischventil integriert werden und sind zudem störungsanfällig und somit wartungsintensiv sowie wirtschaftlich nicht nutzbar, da zu teuer.

In der DE-C-36 22 139 wird ebenfalls ein derartiger Ansatz beschrieben. Dort ist die Warmwasserleitung im Bereich einer Verbraucherstelle mit einem steuerbaren Wasserablaßventil versehen, das durch einen an der Warmwasserleitung angeordneten Temperatursensor bei Unterschreitung einer vorgegebenen Grenztemperatur in den geöffneten Zustand versetzbar ist und das in der Kaltwasserleitung mündet. Die dafür notwendige Druckdifferenz zwischen Warmwasserleitung und Kaltwasserleitung wird durch ein Druckreduzierventil in der Kaltwasserleitung erreicht. Die Förderung von kalt gewordenem Wasser aus der Warmwasserleitung in die Kaltwasserleitung erfolgt temperaturabhängig, so daß hier also die Funktion einer temperaturgesteuerten Zirkulationsleitung gegeben ist, bei der die Rücklaufleitung durch die Kaltwasserleitung gegeben ist Es wird hierbei Energie verschwendet, wenn in die Warmwasserleitung Warmwasser nachgefördert wird, obwohl keine Entnahme von Wasser gegeben ist

In der DE-A-37 23 089 wird eine Anordnung beschrieben, die sehr ähnlich ist, wobei jedoch nur eine Förderung von Wasser zu niedriger Temperatur aus der Warmwasserleitung in die Kaltwasserleitung erfolgt, wenn Warmwasser entnommen wird. Hierbei muß jedoch eine Überbrückungsleitung vorgesehen werden, die die Warmwasserleitung mit der Kaltwasserleitung verbindet und in der eine relaisgesteuerte Umwälzpumpe angeordnet ist. Hinzu kommt, daß das Betätigungsorgan geöffnet und anschließend wieder geschlossen werden muß, um die Vorrichtung über einen Strömungsschalter zu betätigen. Infolgedessen muß das Betätigungsorgan von Zeit zu Zeit wieder geöffnet werden, um festzustellen, ob nun die gewünschte Mischtemperatur erreicht ist. Dies läuft dem eigentlichen Sinn der Vorrichtung zuwider.

Auch in der DE-A-44 10 865 wird eine entsprechende elektronische Bedarfssteuerung beschrieben, die ein Relais und ein zusätzliches Zeitrelais umfaßt.

Bei den beiden letztgenannten Druckschriften ergibt sich zudem das Problem, daß während des Umpumpens von kaltgewordenem Warmwasser in die Kaltwasserleitung bereits Kaltwasser aus dem Wassermischventil austritt. Es wird somit zwar Energie gespart, jedoch nur ein Teil der erreichbaren Wassereinsparung erzielt.

Schließlich wird in der DE-C-195 18 910 eine Warmwasserversorgung beschrieben, bei der der Verlust des vor der geschlossenen Warmwasser-Zapfstelle aufgestauten und abgekühlten Wassers vermieden werden soll, wozu der Zulauf an Warmwasser zu der geöffneten Warmwasser-Zapfstelle gesperrt wird und das Warmwasser in einem Kreislauf über den Erhitzer zurückgeführt wird. Es handelt sich also um eine Vorrichtung mit getrennten Zapfstellen für Warm- und Kaltwasser und nicht um eine Vorrichtung, aus der aus Warm- und Kaltwasser gemischtes Wasser einer bestimmten Temperatur abgerufen werden kann. Hinzu kommt, daß ein Druckabfall in dem System durch die Betätigung einer anderen Warmwasser-Zapfstelle zu Funktionsstörungen führen kann.

Die Erfindung hat somit zur Aufgabe, eine Wassersteuerungsvorrichtung gemäß dem Oberbegriff zu schaffen, bei der in allen Fällen nur Wasser ab Erreichen der gewünschten Temperatur austritt und bei der somit gegenüber den bekannten Lösungen eine optimale Wasser- und Energieeinsparung erzielt wird.

Diese Aufgabe wird erfindungsgemäß dadurch gelöst, daß eine über einen ersten, im Warmwasserbereich angeordneten Temperatursensor gesteuerte Kolbenanordnung vorgesehen ist, die beim Öffnen des Warmwasserauslasses unabhängig von der Temperatur im Kaltwasserauslaß der Wassersteuervorrichtung und bei Vorliegen einer Warmwassertemperatur unterhalb einer wählbaren gewünschten Grenztemperatur des Warmwassers das Wasser aus der Warmwasserleitung in die Kaltwasserleitung umleitet und sowohl den Warmwasserauslaß als auch den Kaltwasserauslaß sperrt und bei Erreichen dieser Grenztemperatur sowohl Warmwasser als auch Kaltwasser austreten läßt.

Als Weiterbildung der Erfindung ist vorgesehen, daß die Wassersteuervorrichtung Mittel zum Bestimmen von statischen Druckdifferenzen zwischen Kaltwasser- und Warmwasserleitung und Mittel zum Erkennen eines Warmwasservolumenstroms umfaßt.

Es liegt auch im Rahmen der Erfindung, daß durch die Mittel zum Bestimmen von Druckdifferenzen und die Mittel zum Erkennen eines Warmwasservolumenstroms ein Steuerelement betätigbar ist.

Es ist auch zweckmäßig, daß der Warmwasserauslaß und der Kaltwasserauslaß der Wassersteuervorrichtung mit einem Wassermischventil mit einem Betätigungsorgan und einem Mischwasserauslauf verbunden sind, das einen zweiten Thermosensor aufweist, über den bei Erreichen der gewählten Minimaltemperatur des Mischwassers die Volumenströme von Kaltwasser und Warmwasser entsprechend der gewählten Mischwassertemperatur regelbar sind.

Weiterhin ist es vorteilhaft, daß das Betätigungsorgan ein Einhandhebel ist.

Die Vorteile der Erfindung bestehen im wesentlichen darin, daß jeweils erst ab Erreichen der gewünschten Temperatur Wasser aus der Wasserleitung austritt und somit ein nutzloses Wegfließen von Wasser, das nicht der gewünschten Temperatur entspricht, vermieden werden kann, ohne daß eine aufwendige doppelte Leitungsführung erforderlich ist. Weiterhin kann das Betätigungsorgan in geöffneter Stellung verbleiben, da bis zum Erreichen der gewünschten Mischtemperatur kein Wasseraustritt exfolgt. Weiterhin ist von großer praktischer Bedeutung, daß die Vorrichtung auch dann funktioniert, wenn es durch das Öffnen einer weiteren im Wasserkreislauf angeordneten Wasserzapfvorrichtung zu einem Druckabfall in dem Wasserkreislauf kommt. Hinzu kommt, daß der Gegenstand der Erfindung auch in rein mechanischer Ausführung herstellbar ist, wobei jedoch auch entsprechende elektronische Ausführungen möglich sind. Es wird also erstmals ein Wassermischventil geschaffen, das allen Anforderungen entspricht.

Im folgenden wird eine beispielhafte Ausführung der Erfindung anhand von Zeichnungen erläutert. Es zeigen
- Fig. 1: eine geschnittene Darstellung einer erfindungsgemäßen Wassersteuervorrichtung mit einem angeschlossenen Wassermischventil in geschlossener Stellung,
- Fig. 2: eine geschnittene Darstellung einer erfindungsgemäßen Wassersteuerungsvorrichtung mit einem angeschlosssenen Wassermischventil, wobei das Warmwasser nicht die erforderliche Temperatur aufweist,
- Fig. 3: eine geschnittene Darstellung einer erfindungsgemäßen Wassersteuerungsvorrichtung mit einem angeschlosssenen Wassermischventil, nachdem das Warmwasser die erforderliche Temperatur aufweist,
- Fig. 4: eine geschnittene Darstellung einer erfindungsgemäßen Wassersteuerungsvorrichtung mit einem angeschlosssenen Wassermischventil nach Aktivierung der Differenzdrucksicherung,
- Fig. 5: ein erfindungsgemäßes Einhand-Wassermischventil mit thermostatischer Regelung,
- Fig. 6: eine erfindungsgemäße Warmwassersteuerungsvorrichtung mit Auslaufschutz,
- Fig. 7: drei Volumen-Temperatur-Diagramme.

Die erfindungsgemäße Wassersteuervorrichtung mit angeschlossenem Wassermischventil 1 (im folgenden: Vorrichtung 1) verfügt über einen Anschluß an eine Kaltwasserleitung KW und einen Anschluß an eine Wannwasserleitung WW, ein Betätigungsorgan 2, mit dem die gewünschte Wassermenge und die gewünschte Wassertemperatur eingestellt werden sowie einen Mischwasserauslauf 3 für Mischwasser MW, das in dem Wassermischventil 1 aus Kaltwasser und Warmwasser mit der eingestellten Mischtemperatur gemischt wurde. Weiterhin verfügt die Vorrichtung 1 über einen unteren und einen oberen Temperatursensor T1 und T2.

Das Warmwasser tritt in Fig. I durch die Warmwasserleitung WW und ein Ventil 4 in die Vorrichtung 1 ein. Da es nicht durch die an dem Zwischenstück 6 befestigten Membran M1 hindurchtreten kann, übt es auf diese einen statischen Druck aus und steigt innerhalb der Vorrichtung 1 durch seitliche Kanäle 5 in den Bereich unterhalb der im unteren Bereich des Kolbens K1 angeordneten Membran M2 und oberhalb des Zwischenstücks 6.

Der Thermosensor T1 wirkt über eine Rückstellfeder F1 auf einen Kolben K3 ein, der über einen Kolben K2 mit Vorspannfeder F2 innerhalb des Kolbens K1 angeordnet ist, welcher wiederum eine Vorspannfeder F3 aufweist. Der Kolben K3 erstreckt sich in seinem unteren Bereich durch die Membran M2 und durch das Zwischenstück 6 hindurch bis zur Membran M1.

Durch die Membran M2 tritt das Warmwasser in den Bereich des Thermosensors T1 ein, umspült diesen und wird durch ein mit dem Kolben K1 verbundenes Verschlußelement 7 am Weiterfluß gehindert.

Das Kaltwasser tritt durch die Kaltwasserleitung KW in die Vorrichtung 1 ein, füllt den seitlichen Verbindungsgang 8 und wird durch ein Ventil 9 in diesem Verbindungsgang 8 am Weiteranstieg gehindert.

Der Weiteranstieg in der Vorrichtung 1 erfolgt über den seitlichen Kaltwasserkanal 10 über ein Ventil 11 bis auf Höhe des zweiten Thermosensors T2, wo eine Sperrung vorliegt. Gleichzeitig tritt das Kaltwasser durch eine Öffnung vom seitlichen Kaltwasserkanal 10 und einen seitlichen Verbindungsgang 12 in den Bereich oberhalb der Membran M1 ein, so daß an der einen Seite dieser Membran das Warmwasser, an der anderen Seite das Kaltwasser mit dem jeweiligen statischen Druck anliegen.

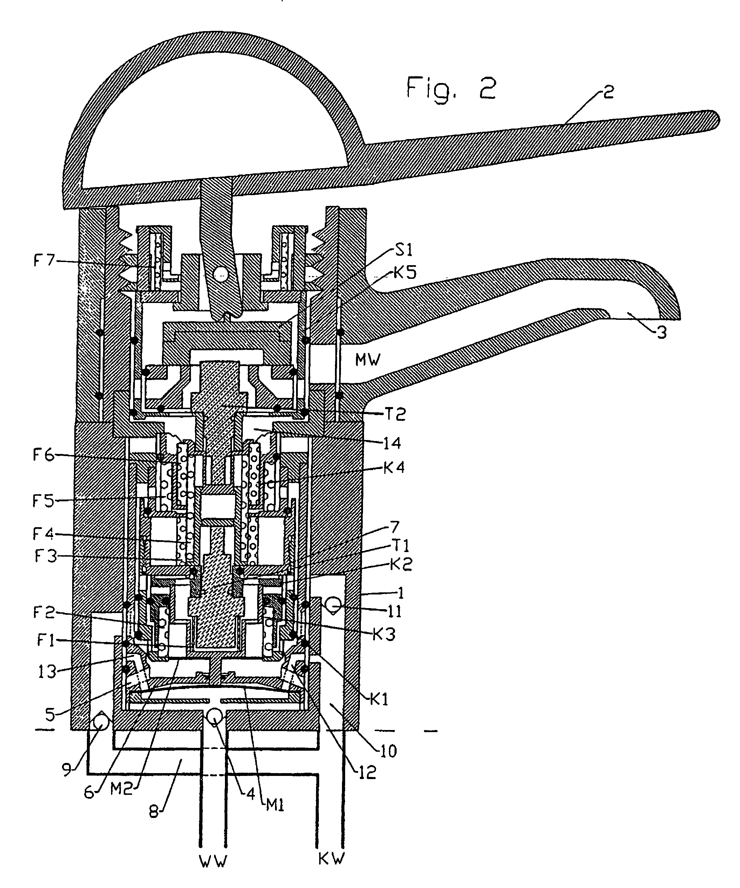

In Fig. 2 wird das Betätigungsorgan 2, das hier ein Einhebelmischer ist, geöffnet und Warmwasser von einer Temperatur oberhalb der Temperatur des in der Vorrichtung 1 vorhandenen Warmwassers angefordert. Hierbei verschiebt sich der Schieber S1 in die Offenstellung, die den Austritt von Mischwasser MW aus dem Mischwasserauslauf 3 ermöglicht.

Über den Thermosensor T1 wird der Kolben K1 von seinem unteren Sitz 13 hoch bewegt und das zu kalte Warmwasser wird über den seitlichen Verbindungsgang 8 unter Öffnen des dort befindlichen Ventils 9 in die Kaltwasserleitung KW geführt.

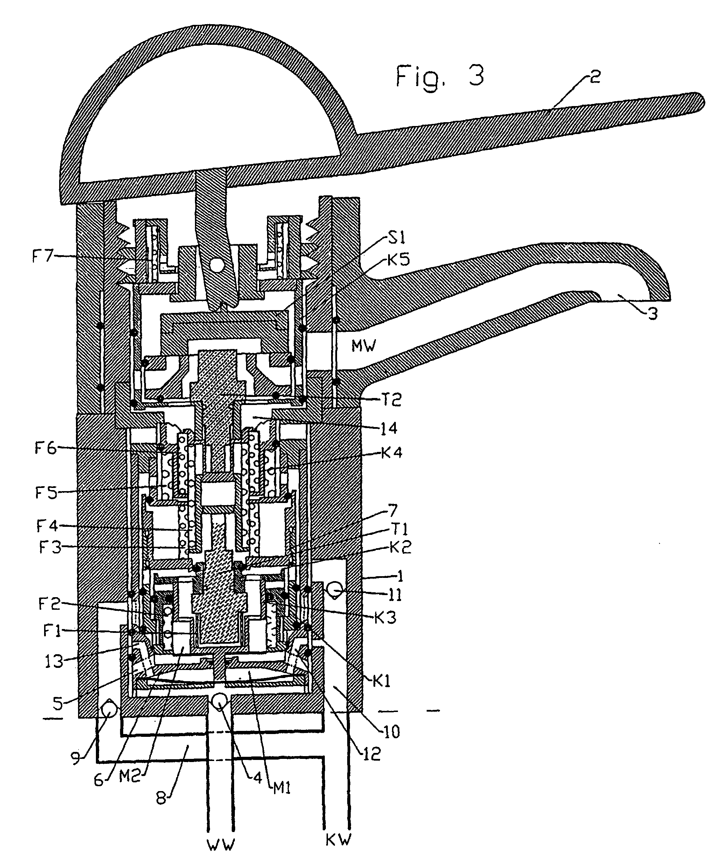

In Fig. 3 ist der Zustand dargestellt, wenn das Warmwasser eine genügende Temperatur erreicht hat. Dann wird durch den Thermosensor T1 der Kolben K1 wieder geschlossen und der in Fig. 2 geöffnete Durchgang des Warmwassers in den seitlichen Verbindungsgang zum Kaltwasserzufluß wieder geschlossen. Der Kolben K2 wird ebenfalls durch den Thermosensor T1 nach unten verschoben und somit oberhalb dieses Kolbens K2 ein Durchgang für das Warmwasser geöffnet. Das Warmwasser steigt nach oben, tritt durch eine Feder F5, die als Vorspannfeder für den Mischwasserthermostatkolben K4 dient, und unterhalb des Kolbens K4 sowie die Feder F4, die als Vorspannfeder für den Thermosensor T1 dient, sowie durch die Feder F6, die als Sicherungsfeder für den Thermosensor T2 dient, hindurch in den Bereich 14 seitlich des Thermosensors T2. In dem Bereich 14 werden Warmwasser und Kaltwasser gemischt.

Dieser Thermosensor T2 regelt den Mischwasserthermostatkolben K4 so, daß die Temperatur des Mischwassers MW der über das Betätigungsorgan 2 angeforderten Temperatur entspricht und das Mischwasser verläßt über den geöffneten Schieber S1 den Mischwasserauslauf 3 das Wassermischventils 1.

Der Kolben K3 wird geöffnet, wenn keine Druckdifferenz zwischen Warmwasser und Kaltwasser vorliegt oder wenn kein Durchfluß vom Warmwasser ins Kaltwasser gegeben ist.

Zusätzlich kann zweckmäßigerweise ein Temperatureinstellkolben K5 mit einer Vorspannfeder F7 vorgesehen sein, mit dem die Ausdehnung des Thermosensors T2 variiert werden kann.

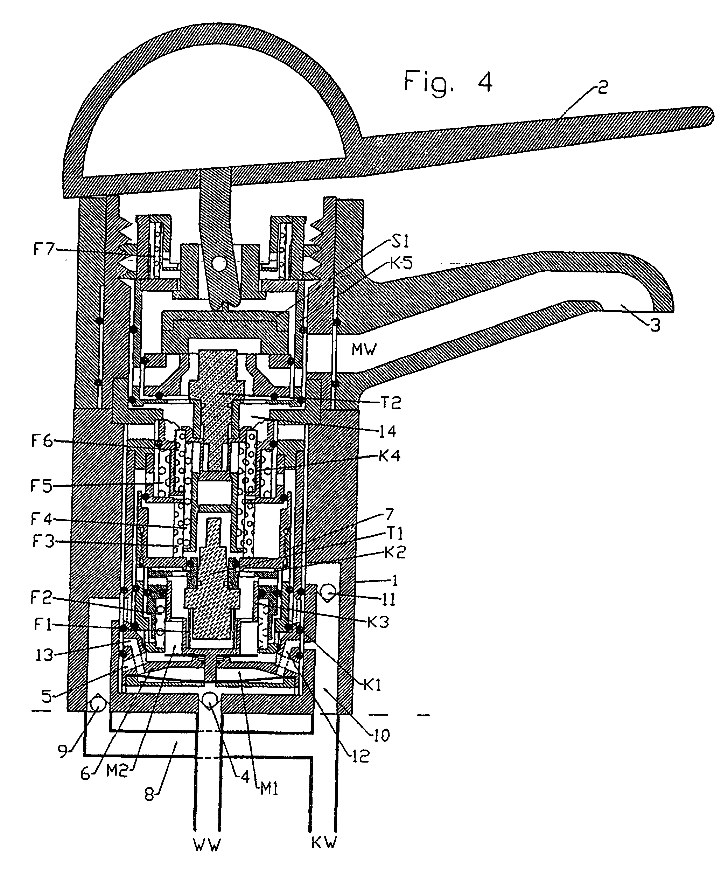

Fig. 4 enthält eine geschnittene Darstellung einer erfindungsgemäßen Vorrichtung 1 nach Aktivierung der Differenzdrucksicherung. Diese dient dazu, daß bei einem Druckabfall in der Warmwasserleitung, z.B. durch Öffnen eines nahegelegenen Warmwasserhahns, trotzdem Wasser aus der Vorrichtung 1 entnommen werden kann. Die Differenzdrucksicherung besteht aus den zwei Membranen M1 und M2.

Auf der Membran M1 lastet einerseits der statische Druck der Kaltwasserleitung KW und andererseits der statische Druck der Warmwasserleitung WW. Ist der statische Druck der Warmwasserleitung WW größer als der der Kaltwasserleitung KW, drückt die Membran M1 auf den Kolben K3 und schließt diesen. Ist der statische Druck der Warmwasserleitung WW kleiner als der der Kaltwasserleitung KW, öffnet die Membran M1 den Kolben K3 und läßt Warmwasser durch, der Kolben K2 wird also überbrückt.

Die Membran M2 ist eine Art Stauscheibe, durch die das Warmwasser durchtreten kann. Sie dient dazu, innerhalb der Differenzdrucksicherung den dynamischen Druck des Warmwassers zu ermitteln. Strömt Warmwasser durch die Membran M2 hindurch und wird somit eine dynamische Kraft auf die Membran M2 ausgeübt, wirkt die Membran M2 auf den Kolben K3 und schließt diesen.

Die Membranen M1 und M2 beeinflussen also durch ihr Zusammenspiel den Kolben K3, wobei dieser entweder geöffnet oder geschlossen wird.

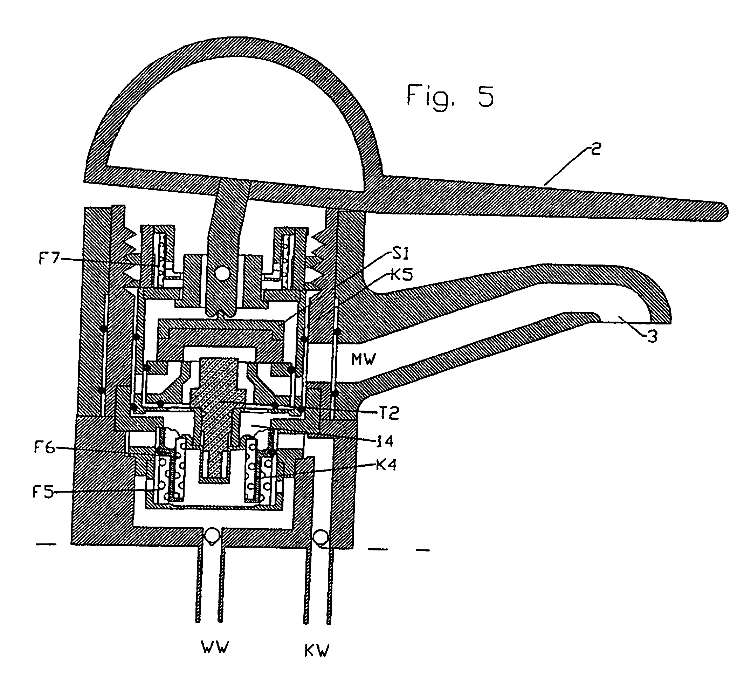

Fig. 5 zeigt den oberen Teil der gesamten Vorrichtung, wie sie in Funktion in Fig. 3 dargestellt ist. Aus der Beschreibung der Vorrichtung ist ersichtlich, daß das Oberteil auch allein als Einhand-Mischbatterie mit thermostatischer Regelung eingebaut werden kann, wobei der Kaltwasseraustritt durch eine Sperrung des Kolbens K4 statt wie bei der oben beschriebenen Ausführung durch eine Sperrung des Kolbens K1 erfolgt.

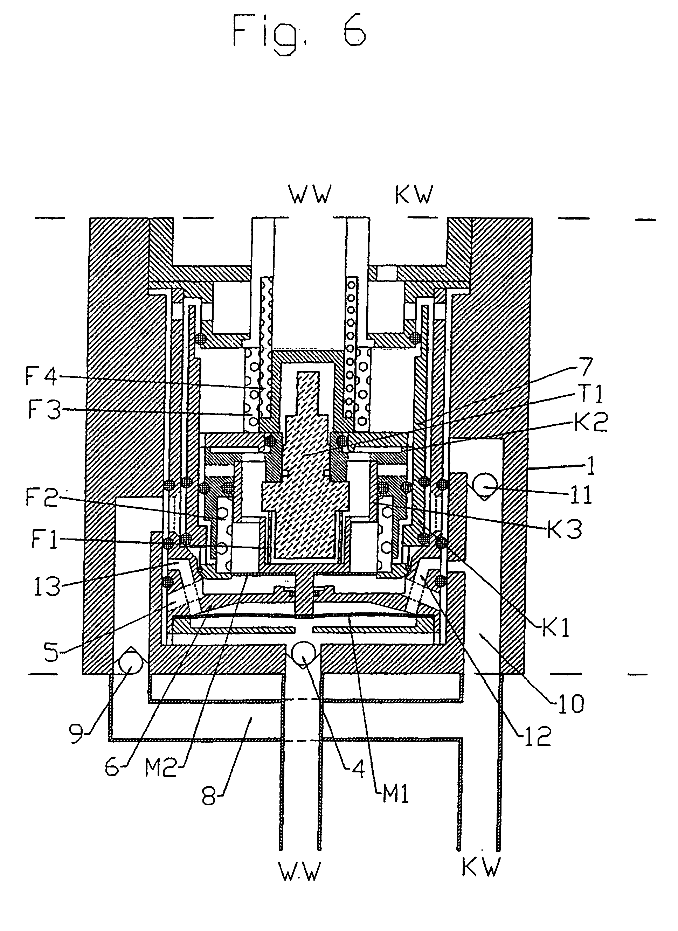

Ensprechend kann das Unterteil der Vorrichtung gemäß Fig. 6 als Wassersteuervorrichtung mit Auslaufschutz für eine beliebige nachgeordnete Mischbatterie bei allen Arten von Wasserauslaßventilen verwendet werden, wobei auch eine Nachrüstung vorhandener Ventile möglich ist.

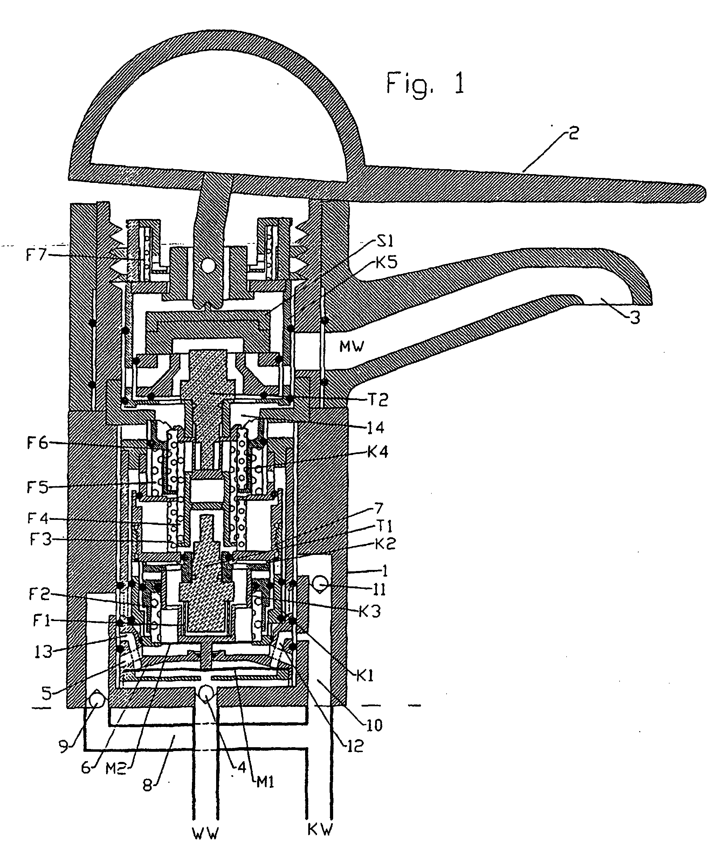

Das in den Fig. 1 bis 4 dargestellte Zusammenspiel des oberen Teils (Fig. 5) und des Unterteils (Fig. 6) läßt sich wie folgt zusammenfassen: Das Unterteil mit dem Thermosensor T1 dient dazu, bei Erreichen einer geforderten Mindesttemperatur einen Wasserauslaß zu ermöglichen, wohingegen das obere Teil mit dem Thermosensor T2 bei Erreichen der eingestellten Maximaltemperatur den Warmwasserauslauf abregelt. Je nachdem, wie groß der Abstand zwischen Minimal und Maximaltemperatur eingestellt ist, kann Wasser eines großen oder eines kleinen Temperaturspektrums entnommen werden. Bei einer sehr kleinen Temperaturdifferenz zwischen Minimal- und Maximaltemperatur wird die gewählte Wassertemperatur sehr genau, im anderen Fall nur mit einem größeren Schwankungsbereich erreicht.

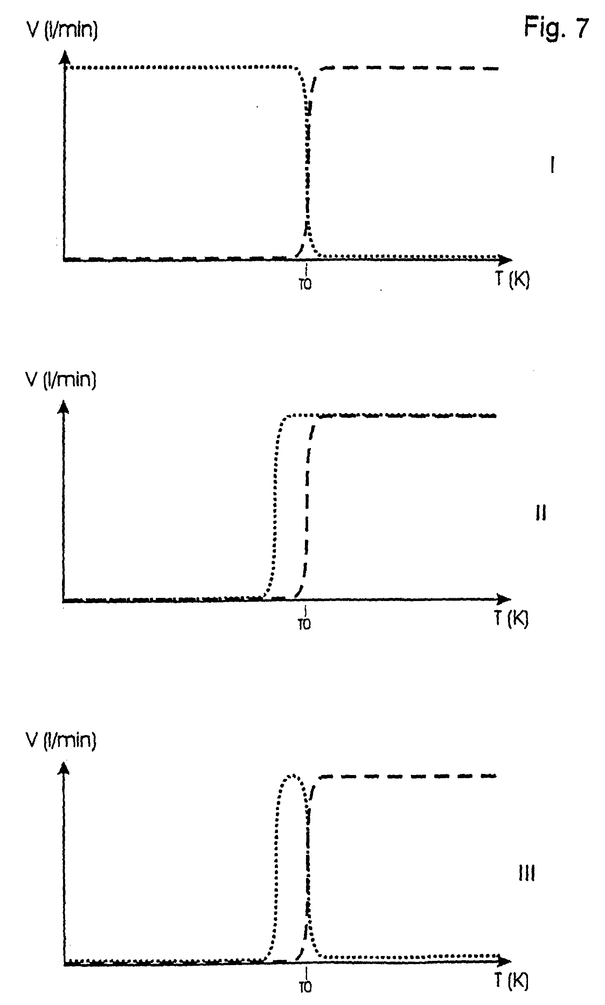

Fig. 7 zeigt drei Volumen-Temperaturdiagramme, wobei jeweils das Kaltwasser als gestrichelte Linie und das Warmwasser als gepunktete Linie dargestellt ist.

Bei einem konventionelllen Temperaturregler (I) tritt zunächst nur Warmwasser aus, bis die gewünschte Minimaltemperatur T0 erreicht ist. Dann werden der Warmwasserstrom und der Kaltwasserstrom so geregelt, daß Mischwasser der gewünschten Temperatur austritt.

Bei der erfindungsgemäßen Wassersteuervorrichtung (II) tritt zunächst weder Warmwasser noch Kaltwasser aus, bis (je nach Einstellung) kurz vor (oder bei) Erreichen von T0 Warmwasser auszutreten beginnt. Bei Erreichen von T0 tritt auch Kaltwasser aus und die gewünschte Mischwassertemperatur wird über Regelung der Volumenströme von Warmwasser und Kaltwasser erreicht.

Ist zusätzlich eine Regelvorrichtung für das Begrenzen der maximalen Warmwassertemperatur vorhanden (III), dann ergibt sich ein ähnlicher Kurvenverlauf wie in (II), nur wird hier lediglich Warmwasser eines definierten Temperaturbereichs durchgelassen und anschließend der Warmwasserstrom entsprechend abgeregelt.

## Patentansprüche

1. Wassersteuervorrichtung mit einem Anschluß an eine Kaltwasserleitung und einem Anschluß an eine Warmwasserleitung, einem Warmwasserauslaß und einem Kaltwasserauslaß sowie einer steuerbaren Wasserumleitvorrichtung zum Umleiten von Wasser aus der Warmwasserleitung in die Kaltwasserleitung bei Unterschreitung einer vorgegebenen Grenztemperatur des Warmwassers, **dadurch gekennzeichnet, daß** eine über einen ersten, im Warmwasserbereich angeordneten Temperatursensor (T1) gesteuerte Kolbenanordnung (K1, K2, K3) vorgesehen ist, die beim Öffnen des Warmwasserauslasses unabhängig von der Temperatur im Kaltwasserauslaß der Wassersteuervorrichtung und bei Vorliegen einer Warmwassertemperatur unterhalb einer wählbaren gewünschten Grenztemperatur des Warmwassers das Wasser aus der Warmwasserleitung in die Kaltwasserleitung umleitet und sowohl den Warmwasserauslaß als auch den Kaltwasserauslaß sperrt und bei Erreichen dieser Grenztemperatur sowohl Warmwasser als auch Kaltwasser austreten läßt.

2. Wassersteuervorrichtung gemäß Anspruch 1, **dadurch gekennzeichnet, daß** die Wassersteuervorrichtung Mittel zum Bestimmen von statischen Druckdifferenzen (M1) zwischen Kaltwasser- und Warmwasserleitung (KW, WW) und Mittel zum Erkennen eines Warmwasservolumenstroms (M2) umfaßt.

3. Wassersteuervorrichtung gemäß Anspruch 2, **dadurch gekennzeichnet, daß** durch die Mittel zum Bestimmen von Druckdifferenzen (M1) und die Mittel zum Erkennen eines Warmwasservolumenstroms (M2) ein Steuerelement (K3) betätigbar ist.

4. Wassersteuervorrichtung gemäß einem der Ansprüche 1 bis 3, **dadurch gekennzeichnet, daß** der Warmwasserauslaß und der Kaltwasserauslaß der Wassersteuervorrichtung mit einem Wassermischventil mit einem Betätigungsorgan (2) und einem Mischwasserauslauf verbunden sind, das einen zweiten Thermosensor (T2) aufweist, über den bei Erreichen der gewählten Minimaltemperatur des Mischwassers die Volumenströme von Kaltwasser (KW) und Warmwasser (WW) entsprechend der gewählten Mischwassertemperatur regelbar sind.

5. Wassersteuervorrichtung gemäß Anspruch 4, **dadurch gekennzeichnet, daß** das Betätigungsorgan (2) ein Einhandhebel ist.

## Claims

1. A water control device having a connection to a cold-water pipe and a connection to a hot-water pipe, a hot-water outlet and a cold-water outlet and a controllable water diversion device for diverting hot water from the hot-water pipe into the cold-water pipe when its temperature falls short of a predetermined minimum, **characterised in that** a piston arrangement (K1, K2, K3) is provided which is controlled by means of a first temperature sensor (T1) located in the hot water zone and which, when the hot water outlet is opened and the temperature of the hot water falls short of a selectable, discretionary minimum temperature, diverts the water from the hot-water pipe into the cold-water pipe irrespective of the temperature in the cold-water outlet of the water control device, and also blocks both the hot-water outlet and the cold-water outlet until the minimum temperature has been reached, after which delivery of both hot and cold water is permitted.

2. The water control device of claim 1, **characterised in that** the water control device has means (M1) for determining static pressure differences between the cold and hot water pipes (KW, WW) and means (M2) for detecting a hot-water volume flow.

3. The water control device of claim 2, **characterised in that** a control element (K3) can be actuated by the means (M1) for determining pressure differences and the means (M2) for detecting a hot-water volume flow.

4. The water control device according to one of the claims 1 to 3, **characterised in that** the hot-water outlet and the cold-water outlet of the water control device are connected with a water-mixing valve that is provided with a turn-on element (2) and a mixed-water outlet and has a second temperature sensor (T2) by means of which, once the selected minimum temperature of the mixed water has been reached, the volumetric flow rates of the cold water (KW) and the hot water (WW) can be controlled according to the selected mixed-water temperature.

5. The water control device of claim 4, **characterised in that** the turn-on element (2) is a one-hand lever.

## Revendications

1. Dispositif de commande d'eau avec un raccord à une conduite d'eau froide et un raccord à une conduite d'eau chaude, une sortie d'eau chaude et une sortie d'eau froide, ainsi qu'un dispositif de dérivation d'eau pouvant être commandé pour dériver l'eau sortant de la conduite d'eau chaude dans la conduite d'eau froide lorsque la température de l'eau chaude passe en dessous d'une température limite préfixée, **caractérisé en ce qu'**il est prévu une installation de pistons (K1, K2, K3), commandée par un premier capteur de température (T1) disposé dans la zone d'eau chaude, qui dirige l'eau sortant de la conduite d'eau chaude dans la conduite d'eau froide lors de l'ouverture de la sortie d'eau chaude, indépendamment de la température dans la sortie d'eau froide du dispositif de commande d'eau et lorsque la température de l'eau chaude est inférieure à une température limite souhaitée réglable pour l'eau chaude, et qui bloque aussi bien la sortie d'eau chaude que la sortie d'eau froide et laisse sortir aussi bien l'eau chaude que l'eau froide lorsque cette température limite est atteinte.

2. Dispositif de commande d'eau selon la revendication 1, **caractérisé en ce que** le dispositif de commande d'eau comprend des moyens pour déterminer des différences de pression statique (M1) entre la conduite d'eau froide et la conduite d'eau chaude (KW, WW) et des moyens pour détecter un écoulement volumétrique de l'eau chaude (M2).

3. Dispositif de commande d'eau selon la revendication 2, **caractérisé en ce qu'**un élément de commande (K3) peut être actionné par les moyens pour déterminer les différences de pression (M1) et les moyens pour détecter un écoulement volumétrique de l'eau chaude (M2).

4. Dispositif de commande d'eau selon l'une des revendications 1 à 3, **caractérisé en ce que** la sortie d'eau chaude et la sortie d'eau froide du dispositif de commande d'eau sont reliées à un mitigeur ayant un organe d'actionnement (2) et une sortie d'eau mitigée, et qui est muni d'un deuxième détecteur de température (T2) à l'aide duquel l'écoulement volumétrique de l'eau froide (KW) et de l'eau chaude (WW) peut être réglé en fonction de la température de l'eau mitigée choisie lorsque la température minimale choisie pour l'eau mitigée est atteinte.

5. Dispositif de commande d'eau selon la revendication 4, **caractérisé en ce que** l'organe d'actionnement (2) est un levier pour une main.
